# EUROPEAN PATENT APPLICATION

(11) **EP 4 715 803 A1**
(43) Date of publication of application: **25.03.2026**
(21) Application number: 24202236.6
(22) Date of filing: 24.09.2024
(51) Int. Cl.: G10K 11/16

(54) **A METHOD FOR PROVIDING SOUND REDUCTION OF A VEHICLE COMPONENT**

(71) Applicant: VOLVO TRUCK CORPORATION, 405 08 Göteborg (SE)
(72) Inventor: THOWBIK AHAMED, Khizar Ahmed, 603202 KANCHIPURAM TAMILNADU (IN); RAVINDRAN, Reji, 560087 BANGALORE (IN); CHAVDA, Mishal, 390022 GUJARAT (IN)
(74) Representative: Kransell & Wennborg KB

(57) **Abstract**

A method for providing sound reduction of a vehicle component being a sound emitting source (12, 22, 122), the method comprising: providing (S10) a first sound insulation module (110) composed of a first material (M1) and having a first thickness (Th1) for achieving a first sound-reducing capability with regards to sound level (dB) and frequency (Hz) of the emitted sound, and a second sound insulation module (112) composed of a second material (M2) and a having second thickness (Th2) for achieving a second sound-reducing capability with regards to sound level (dB) and frequency (Hz) of the emitted sound; attaching (S40) the first and second sound insulation modules (110, 112) onto the attachment structure (105) of the carrier (101) such that a first portion (101a) of the carrier (101) is provided with the first sound insulation module (110) and a second portion (101b) of the carrier (101) is provided with the second sound insulation module (112).

## Description

### TECHNICAL FIELD

The disclosure relates generally to sound reduction in vehicles. In particular aspects, the disclosure relates to a method for providing sound reduction of a vehicle component. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Noise insulation in vehicles is critical for enhancing occupant comfort and complying with stringent noise, vibration, and harshness (NVH) regulations. Traditionally, noise insulation solutions involve encapsulating sound emitting components, such as the engine, with bulky and heavy sound-absorbing materials. These solutions, while effective in reducing noise, often lead to significant increases in the overall volume and/or weight of the insulation, resulting in packaging challenges and reduced available space within the vehicle. Furthermore, the need for larger insulation materials conflicts with the ongoing trend toward lighter, more compact vehicle designs.

To address these challenges, various developments of noise insulation technologies have been developed. However, existing solutions still struggle to offer the necessary adaptability to different noise sources and operating conditions.

### SUMMARY

According to a first aspect of the disclosure, a method for providing sound reduction of a vehicle component being a sound emitting source is provided. The method comprises: providing a first sound insulation module composed of a first material and having a first thickness for achieving a first sound-reducing capability with regards to sound level and frequency of the emitted sound, and a second sound insulation module composed of a second material and a having second thickness for achieving a second sound-reducing capability with regards to sound level and frequency of the emitted sound, the second material being different from the first material and the second thickness being different from the first thickness; arranging a carrier to at least partly enclose the sound emitting source, the carrier having an outer surface provided with an attachment structure configured to attach, and support, the first and second sound insulation modules; attaching the first and second sound insulation modules onto the attachment structure of the carrier such that a first portion of the carrier is provided with the first sound insulation module and a second portion of the carrier is provided with the second sound insulation module. The first aspect of the disclosure may seek to solve problems with bulky, heavy and/or invariable sound absorption of vehicle components. A technical benefit may include an improved sound reduction of a vehicle component with regards to the thickness of the sound insulation modules and/or the material of the sound insulation modules. The sound level is typically measured in decibel, dB, and the frequency in hertz, Hz.

By using at least two sound insulation modules for which the material and thickness differ, a more versatile method for arranging the sound insulation modules relative to the sound emitting source can be provided. Moreover, as both the material and thickness differ between the first and second sound insulation modules, the sound insulation modules can be better adapted to provide sound-reducing capabilities with regards to the sound level for specific frequencies of the emitted sound. That is, as there are at least two sound emitting parameters, i.e. sound level and frequency of the emitted sound, it is beneficial to provide sound insulation modules which differ in at least two sound reducing parameters, i.e. thickness and material. By customizing the sound insulation modules with regards to material and thickness, specific sound characteristics of a vehicle component can be matched and the sound emitted therefrom absorbed and/or reduced in an advantageous manner. Moreover, the sound insulation modules can be attached to the attachment structure of the carrier and arranged relative to the sound emitting source in a more versatile manner. Such arrangement also promotes modularity of the sound insulation modules, and the sound insulation modules can be better customized for the specific sound emitting source. Moreover, for different sound emitting sources (e.g. on the same vehicle, or different sound emitting sources of different vehicles), the same type of sound insulation modules can be used. Thus, for two different sound emitting sources, the same type of sound insulations modules can by arranged differently on the carrier to better adapt for the specific sound emitting source. The system thus provides the flexibility to upgrade, downgrade, or reconfigure the sound insulation as needed, improving the sound reduction while reducing the impact on vehicle packaging and/or weight. For example, in comparison with a first sound emitting sources, the arrangement of the sound insulation modules relative to the carrier for a second sound emitting sources can be changed by e.g. shuffling, adding or removing the sound insulation modules relative to the first sound emitting source. It should be noted that the sound insulation modules are at least two, but may of course be more, such as e.g. three, four, five or six. In one example, all of the sound insulation modules differ in material and thickness. In another example, at least one of the sound insulation modules (i.e. for examples with more than two sound insulation modules) only differ from another sound insulation module by its thickness or material. Additionally or alternatively, at least two sound insulation modules (i.e. for examples with more than two sound insulation modules) are of the same type, i.e. of the same thickness and material. It should also be noted that the first portion of the carrier is different from the second portion of the carrier. Typically, the first portion and the second portion do not overlap.

Optionally in some examples, including in at least one preferred example, the first and second sound insulation modules are removable and replaceable relative to the attachment structure of the carrier. A technical benefit may include improved arrangement of the sound insulation modules relative to the carrier, as the sound insulation modules may be removed from the carrier, i.e. detached from the attachment structure, and replaced (e.g. repositioned) relative to the carrier, i.e. re-attached to the attachment structure, but in another position. Thus, in case a sound insulation module is attached to the attachment structure in a first position of the carrier (e.g. corresponding to the first portion of the carrier), and it is desirable to re-arrange such sound insulation module to a second position of the carrier (e.g. corresponding to the second portion of the carrier, or another portion of the carrier), the sound insulation module can be detached from the first position of the attachment structure, replaced or repositioned, and re-attached to the attachment structure in the second position. Hereby, the sound reduction characteristics of the sound insulation modules can be adapted in response to varying sound emission requirements of the sound emitting source. The sound reduction characteristic of the sound insulation modules is e.g. a result of the sum of the individual sound-reducing capabilities of the sound insulation modules.

Optionally in some examples, including in at least one preferred example, the first material and first thickness of the first sound insulation module is adapted to achieve the first sound-reducing capability based on a predetermined range of the sound level and a predetermined range of the frequency of the emitted sound, and wherein the second material and second thickness of the second sound insulation module is adapted to achieve the second sound-reducing capability based on a predetermined range of the sound level and a predetermined range of the frequency of the emitted sound. A technical benefit may include improved control of the sound reduction of the sound emitting source. The predetermined range of the sound level and the predetermined range of the frequency associated with the first sound-reducing capability of the first sound insulation module may be a corresponding first range, and the predetermined range of the sound level and the predetermined range of the frequency associated with the second sound-reducing capability of the second sound insulation module may be a corresponding second range. For example, for a predetermined first range of the sound level, e.g. between 100 dB and 110 dB, and for a predetermined first range of the frequency, e.g. between 500 and 1000 Hz, the first material and the first thickness of the first sound insulation module is chosen such that the first sound-reducing capability is achieved (e.g. based on a predefined minimum reduction in sound level). Correspondingly, for a predetermined second range of the sound level, e.g. between 100 dB and 110 dB (or between 100 dB and 120 dB), and for a predetermined second range of the frequency, e.g. between 1000 and 1500 Hz, the second material and the second thickness of the second sound insulation module is chosen such that the second sound-reducing capability is achieved (e.g. based on a predefined minimum reduction in sound level). By that both the material and thickness of the first and second sound insulation modules are different, broader ranges of the sound level and the frequencies of the emitted sound can be reduced and/or absorbed by the first and second sound insulation modules. The second sound-reducing capability of the second sound insulation module is thus different compared to the first sound-reducing capability of the first sound insulation module.

Optionally in some examples, including in at least one preferred example, the method further comprises: determining the sound level and frequency of the sound emitted from the sound emitting source to achieve a sound mapping of the sound level and frequency, wherein the first and second sound insulation modules are attached onto the attachment structure of the carrier in response to the sound mapping. A technical benefit may include improved sound reduction of the sound emitting source. The sound mapping may e.g. be based on a three-dimensional surroundings of the sound emitting source, wherein the sound level and frequency of the emitted sound are tracked over such three-dimensional surroundings. Additionally or alternatively, the sound mapping may be based on one or more two-dimensional projections of the three-dimensional surroundings of the sound emitting source, wherein at least one of such projections overlap with the outer surface of the carrier. Thus, the sound mapping may be provided at least for a projected surface in the surroundings of the sound emitting source, the projected surface at least partly overlapping with the outer surface of the carrier. Hereby, the first portion of the carrier may be associated with a corresponding first portion of the projected surface, and the second portion of the carrier may be associated with a corresponding second portion of the projected surface.

By providing a sound mapping of the sound emitting source, the varying sound level and frequency of the sound emitted from the sound emitting source may be tracked in various directions. By arranging the first and second sound insulation modules relative to the carrier in response to the sound mapping, the sound emitting source may be sound absorbed in an improved manner, as an area or portion of the surroundings of the sound emitting source which is related to a specific emitted sound can be matched with a corresponding sound insulation module (e.g. the first sound insulation module), and another area or portion of the surroundings of the sound emitting source which is related to another, different, specific emitted sound can be matched with a corresponding other sound insulation module (e.g. the second sound insulation module). The sound level and frequency of the emitted sound from the vehicle component in the sound mapping may e.g. be determined or measured by a plurality of sensors arranged in the surroundings of the sound emitting source. Such sensors, e.g. sound and/or frequency sensors may be communicatively connected to control unit. The control unit may be an ECU or a cloud-based server. Thus, the first and second sound levels may be referred to as corresponding first and second measured sound levels, and the first and second frequencies may be referred to as corresponding first and second measured frequencies. The sound mapping may be carried out after the installation of the vehicle component in the vehicle.

Optionally in some examples, including in at least one preferred example, the first portion of the carrier is associated with a first sound level and a first frequency for which the sound reduction of the first sound insulation module is adapted, and wherein the second portion of the carrier is associated with a second sound level and a second frequency for which the sound reduction of the second sound insulation module is adapted. A technical benefit may include improved sound reduction of the sound emitting source. Thus, the first and second sound insulation modules can be arranged in a pre-determined manner relative to the carrier (i.e. in pre-determined positions) to absorb specific emitted sound from the sound emitting sources corresponding to such position. At least one of the sound level and frequency differs between the associated first and second portions. That is, the first and second sound insulation modules are attached onto the attachment structure such that the first sound insulation module is arranged to reduce and/or absorb sound of a first sound level and of a first frequency, and the second sound insulation module is arranged to reduce and/or absorb sound of a second sound level and of a second frequency, wherein at least one of the second sound level and second frequency is different to the corresponding first sound level and first frequency. For example, the sound mapping may result in that the first portion of the carrier is associated with the first sound level and first frequency (i.e. the first portion of the carrier is, during use, subjected to a sound of the first sound level and of the first frequency). Correspondingly, the sound mapping may result in that the second portion of the carrier is associated with the second sound level and second frequency (i.e. the second portion of the carrier is, during use, subjected to a sound of the second sound level and of the second frequency). Thus, the first sound insulation module has a sound reducing capability adapted for the first sound level and first frequency, and the second sound insulation module has a sound reducing capability adapted for the second sound level and second frequency.

For example, each thickness of the first and second sound insulation modules and/or each material of the first and second sound insulation modules is/are determined based on a frequency spectrum analysis of the sound emitted by the vehicle component. Such frequency spectrum analysis is typically based on the previously described sound mapping.

Optionally in some examples, including in at least one preferred example, the method further comprises: monitoring the sound level and frequency of the sound emitted from the sound emitting source after attaching the first and second sound insulation modules onto the attachment structure of the carrier; and re-arranging the first and second sound insulation modules relative to the carrier in response to that the sound reduction of the first and second sound insulation modules does not meet a predefined criterium. A technical benefit may include improved sound reduction of the sound emitting source by adjusting the arrangement (or position) of the sound insulation modules relative to the carrier. Thus, as previously described, the sound insulation modules may be removed from the carrier, i.e. detached from the attachment structure, and replaced (e.g. re-positioned) relative to the carrier, i.e. re-attached to the attachment structure, but in another position, and this may be carried out in response to that the sound reduction of the first and second sound insulation modules does not meet a predefined criterium. The predefined criterium may e.g. be a predefined reduction in sound level. Thus, in case a the arrangement of the first and second sound insulation modules does not result in a satisfying sound reduction (e.g. as the reduced sound does not result in a pre-defined reduction in sound level), the first sound insulation module may be re-arranged from the first portion of the carrier to another portion of the carrier and/or the second sound insulation module may be re-arranged from the second portion of the carrier to another portion of the carrier (e.g. the first and second sound insulation modules may switch places with each other, or be move to other positions of the carrier). Hereby, the sound reduction characteristics of the sound insulation modules can be adapted in response to that the sound reduction of the first and second sound insulation modules does not meet a predefined criterium. Obviously, the fact that the sound reduction of the first and second sound insulation modules does not meet the predefined criterium may be a result of a change in the characteristics of the sound emitted from the sound emitting source.

Optionally in some examples, including in at least one preferred example, the attachment structure comprises a grid of mechanical or adhesive fasteners enabling an adaptive arrangement of the first and second sound insulation modules onto the carrier. A technical benefit may include an advantageous structure for attaching, and potentially re-arranging, the sound insulation modules to the carrier. Typically, each one of the first and second sound insulation modules comprises an associated attachment structure configured to adhere to the attachment structure of the carrier. The attachment structure of the carrier may e.g. comprise a plurality of slots or hooks, or be comprised of an adhesive surface.

Optionally in some examples, including in at least one preferred example, the attachment structure spans over a majority of the carrier. A technical benefit may include an advantageous structure for attaching, and potentially re-arranging, the sound insulation modules to the carrier. Typically, the attachment structure spans over a majority of the outer surface of the carrier.

Optionally in some examples, including in at least one preferred example, the first and second sound insulation modules are configured to be interlocked with one another to form a continuous sound barrier. A technical benefit may include improved sound reduction of the sound emitting source. By such interlocked sound insulation modules, a gap between the sound insulation modules that might reduce the effectiveness of the sound reduction is avoided, or at least reduced. The first and second sound insulation modules may e.g. be configured to be interlocked with one another by means of an interlocking structure, e.g. a male and female connector and/or a snap-locking structure. Alternatively, the interlocking structure is based on an increased frictional force between the sound insulation modules.

It should be noted that the carrier may comprise, or be composed of, an acoustic barrier material that further enhances the overall sound reduction performance when combined with the sound insulation modules. Additionally or alternatively, the carrier and/or the first and second sound insulation modules may be shaped to conform to the contours of the vehicle component. Hereby, the positioning of the sound insulation modules relative to the vehicle component can be improved, e.g. with regards to maximum sound reduction.

It should be noted that the first and second sound insulation modules may preferably be made of materials selected from the group consisting of foam, fibrous materials, composite materials, and polymeric materials. For example, the material may comprise or be compose of polyurethan (PU), glass wool, mineral fibers and/or Thinsulate. The thickness of the first and second sound insulation modules may preferably be in the range of 25 mm to 50 mm, e.g. in range of 30 mm to 45 mm.

According to a second aspect of the disclosure, a sound reduction arrangement for reducing sound from a vehicle component being a sound emitting source is provided. The sound reduction arrangement comprising: a first sound insulation module composed of a first material and having a first thickness for achieving a first sound-reducing capability with regards to sound level and frequency of the emitted sound, and a second sound insulation module composed of a second material and a having second thickness for achieving a second sound-reducing capability with regards to sound level and frequency of the emitted sound, the second material being different from the first material and the second thickness being different from the first thickness; a carrier configured to at least partly enclose the sound emitting source, the carrier having an outer surface provided with an attachment structure configured to attach, and support, the first and second sound insulation modules; wherein the first and second sound insulation modules are attached onto the attachment structure of the carrier such that a first portion of the carrier is provided with the first sound insulation module and a second portion of the carrier is provided with the second sound insulation module. Effects and features of the second aspect of the disclosure are largely analogous to those described above in connection with the first aspect of the disclosure. Examples and embodiments mentioned in relation to the first aspect are largely compatible with the second aspect, of which some are exemplified below typically without repeating the technical effect or advantage(s) of such example or embodiment. The sound reducing arrangement may also be referred to as a sound absorbing arrangement.

Optionally in some examples, including in at least one preferred example, the first and second sound insulation modules are removable and replaceable relative to the attachment structure of the carrier.

Optionally in some examples, including in at least one preferred example, the first material and first thickness of the first sound insulation module is adapted to achieve the first sound-reducing capability based on a predetermined range of the sound level and a predetermined range of the frequency of the emitted sound, wherein the second material and second thickness of the second sound insulation module is adapted to achieve the second sound-reducing capability based on a predetermined range of the sound level and a predetermined range of the frequency of the emitted sound.

Optionally in some examples, including in at least one preferred example, the sound reduction arrangement further comprises a control unit configured to determine the sound level and frequency of the sound emitted from the sound emitting source to achieve a sound mapping of the sound level and frequency, wherein the first and second sound insulation modules are attached onto the attachment structure of the carrier in response to the sound mapping. For example, as mentioned in relation to the first aspect of the disclosure, the sound level and frequency of the emitted sound from the vehicle component in the sound mapping may be determined or measured by a plurality of sensors arranged in the surroundings of the sound emitting source. Such sensors, e.g. sound and/or frequency sensors may be comprised in the sound reduction arrangement and be configured to communicated with the control unit. The control unit may, as previously described, be an ECU or a cloud-based server. The control unit may be configured for real-time monitoring of the sound level and frequency of the sound emitted from the sound emitting source.

Optionally in some examples, including in at least one preferred example, the first portion of the carrier is associated with a first sound level and a first frequency for which the sound reduction of the first sound insulation module is adapted, and wherein the second portion of the carrier is associated with a second sound level and a second frequency for which the sound reduction of the second sound insulation module is adapted.

Optionally in some examples, including in at least one preferred example, the attachment structure comprises a grid of mechanical or adhesive fasteners enabling an adaptive arrangement of the first and second sound insulation modules onto the carrier. As mentioned in the first aspect of the disclosure, each one of the first and second sound insulation modules may comprise an associated attachment structure configured to adhere to the attachment structure of the carrier. The attachment structure of the carrier may e.g. comprise a plurality of slots or hooks, or be comprised of an adhesive surface.

Optionally in some examples, including in at least one preferred example, the attachment structure spans over a majority of the carrier.

Optionally in some examples, including in at least one preferred example, the first and second sound insulation modules are configured to be interlocked with one another to form a continuous sound barrier. As mentioned in the first aspect of the disclosure, the first and second sound insulation modules may e.g. be configured to be interlocked with one another by means of an interlocking structure, e.g. a male and female connector and/or a snap-locking structure and/or be based on increased frictional force between the sound insulation modules.

Optionally in some examples, including in at least one preferred example, the sound reduction arrangement further comprises the vehicle component being the sound emitting source.

According to a third aspect of the disclosure, a vehicle comprising the sound reduction arrangement of the second aspect of the disclosure is provided.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, side view of vehicle comprising an engine according to one example.
**FIG. 2** is an exemplary, partly schematic, perspective view of a sound reduction arrangement according to one example.
**FIG. 3** is another schematic view of the sound reduction arrangement of Fig. 2 and according to one example.
**FIG. 4** is a exemplary, partly schematic, side view of a sound reduction arrangement according to one example.
**FIG. 5** is an exemplary, partly schematic, perspective view of a sound emitting source and an arrangement for providing a sound mapping of the sound emitting source according to one example.
**FIG. 6** are exemplary, partly schematic, top and side views of a sound reduction arrangement according to one example.
**FIG. 7** is a flowchart of an exemplary method according to one example.

### DETAILED DESCRIPTION

The detailed description set forth below provides information and examples of the disclosed technology with sufficient detail to enable those skilled in the art to practice the disclosure.

The disclosed technology may solve the problem relating to bulky, heavy and/or invariable sound absorption of vehicle components. The disclosed technology uses at least two different sound insulation modules, wherein the different sound insulation modules differ in material and thickness, which are attached to a carrier in different portions to improve the sound reduction of a sound emitting source being a vehicle component. By that the at least two sound insulation modules differ in the choice of material and by their thickness, their respective sound reducing capability with regards to the sound level and frequency of the emitted sound differs, and a more versatile method for arranging the sound insulation modules relative to the sound emitting source is provided. A technical benefit may include an improved sound reduction (or sound absorption) of a vehicle component with regards to the thickness of the sound insulation modules and/or the material of the sound insulation modules. For example, the weight of the sound insulation modules can be reduced with maintained sound reduction.

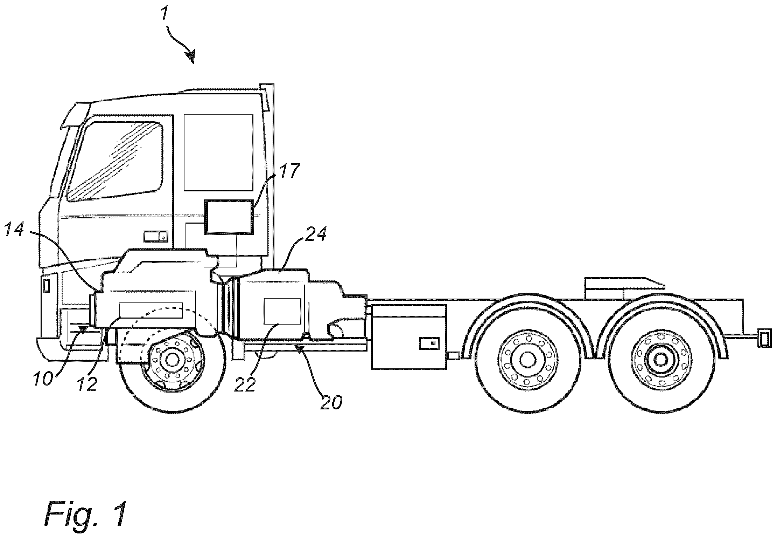

**FIG. 1** shows a vehicle 1 in the form of an exemplary heavy duty truck. The vehicle 1 illustrated in Fig. 1 comprises engine 10 for propelling the vehicle 1. The engine 10 in Fig. 1 is exemplified as an internal combustion engine 10, but may alternatively be an electric traction machine. The engine 10 comprises an engine housing 14 and an engine component 12 arranged inside the engine housing 14. Moreover, the vehicle 1 of the example in Fig. 1 comprises an exhaust after treatment system, EATS, 20 including an EATS component 22 arranged in an EATS housing 24. Both the engine component 12 and the EATS component 22 are example of vehicle components emitting a sound or noise, and may thus be referred to as a sound emitting source (or noise emitting source) of the vehicle 1. Such sound emitting sources 12, 22 are typically in need of sound reduction, in order to mitigate the sound of the vehicle 1.

The vehicle 1 may furthermore comprises a control unit 17 configured to control at least some of the operation of vehicle 1, such as e.g. the measurement of sound emitted from the sound emitting sources 12, 22.

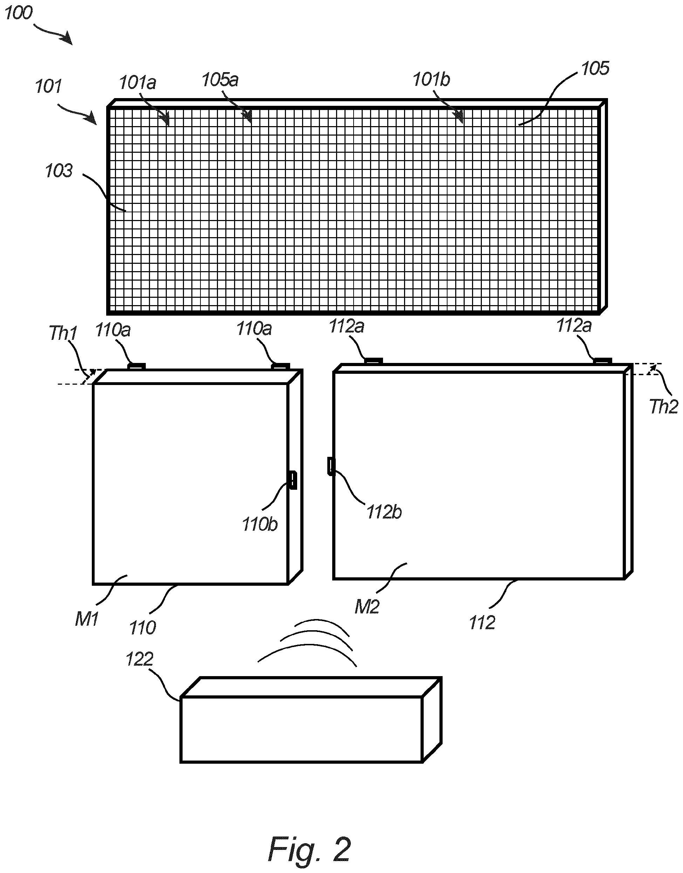

In **FIG. 2****,** a sound reduction arrangement 100 for reducing sound from a vehicle component being a sound emitting source 122 is shown. The sound emitting source 122 may e.g. be one of those described with reference to Fig. 1, i.e. the engine component 12 or the EATS component 22. In Fig. 2, the sound reduction arrangement 100 is shown in an unassembled state for increase clarity.

The sound reduction arrangement 100 comprises a carrier 101, a first sound insulation module 110 composed of a first material M1 and having a first thickness Th1, and a second sound insulation module 112 composed of a second material M2 and having a second thickness Th2. The first material M1 is different from the second material M2 and the first thickness Th1 is different from the second thickness Th2. For example, the first material M1 is more porous than the second material M2, and/or the first thickness Th1 is smaller than the second thickness Th2. The first and second sound insulation modules 110, 112 may be of the same size in a plane perpendicular to the thickness, but may also be of different sizes as shown in the example of Fig. 2.

The first material M1 and the first thickness Th1 of the first sound insulation module 110 are adapted for achieving a first sound-reducing capability with regards to sound level (in dB) and frequency (in Hz) of the emitted sound from the sound emitting source 122. Correspondingly, the second material M2 and the second thickness Th2 of the second sound insulation module 112 are adapted for achieving a second sound-reducing capability with regards to sound level and frequency of the emitted sound from the sound emitting source 122. For example, the first material M1 and first thickness Th1 of the first sound insulation module 110 are adapted to achieve the first sound-reducing capability for a predetermined range of the sound level and a predetermined range of the frequency of the emitted sound from the sound emitting source 122. Correspondingly, the second material M2 and second thickness Th2 of the second sound insulation module 112 are adapted to achieve the second sound-reducing capability for a predetermined range of the sound level and a predetermined range of the frequency of the emitted sound from the sound emitting source 122.

The carrier 101 is configured to at least partly enclose the sound emitting source 122. For example, the carrier 101 may be forming at least a part of the housing of the sound emitting source 122. With reference to Fig. 1, the engine housing 14 and/or the EATS housing 24 may comprise, or be at least partly composed by, the carrier 101. Thus, the sound reduction arrangement 100 may be comprised in the vehicle 1.

The carrier 101 comprises an outer surface 103 provided with an attachment structure 105 configured to attach, and support, the first and second sound insulation modules 110, 112. The first and second sound insulation modules 110, 112 are removable and replaceable relative to the attachment structure 105 of the carrier 103. In the example of Fig. 2, the attachment structure 105 comprises a grid 105a of mechanical or adhesive fasteners enabling an adaptive arrangement of the first and second sound insulation modules 110, 112 onto the carrier 101. As seen in Fig. 2, each one of the first and second sound insulation modules 110, 112 comprises an associated attachment structure 110a, 112a configured to adhere to the attachment structure 105 of the carrier 101. The attachment structure 105 of the carrier 101 may e.g. comprise a plurality of slots or hooks, wherein the associated attachment structures 110a, 112a of the first and second sound insulation modules 110, 112 comprises corresponding hooks or slots. Hereby, the first and second sound insulation modules 110, 112 may be advantageously attached to the attachment structure 105 of the carrier 101. In the example of Fig. 2, the attachment structure 105 spans over a majority of the outer surface 103 of the carrier 101.

The first and second sound insulation modules 110, 112 may be configured to be interlocked with one another to form a continuous sound barrier. For example, and as shown in Fig. 2, the first and second sound insulation modules 110, 112 may e.g. be interlocked with one another by means of an interlocking structure 1 10b, 112b. The interlocking structure 110b, 112b may e.g. be composed of a male and female connector and/or a snap-locking structure. Hereby, a gap between the first and second sound insulation modules 110, 112 that might reduce the effectiveness of the sound reduction is avoided, or at least reduced.

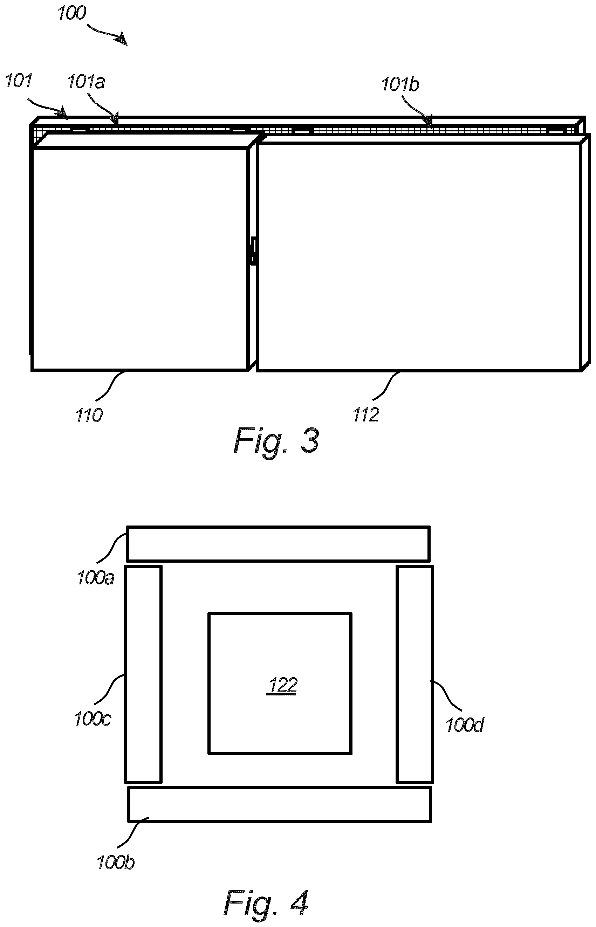

Turning to **FIG. 3****,** showing the sound reduction arrangement 100 of Fig. 2 in an assembled state. Here, the first and second sound insulation modules 110, 112 are attached to the attachment structure 105 of the carrier 101, such that a first portion 101a of the carrier 101 is provided with the first sound insulation module 110 and a second portion 101b of the carrier 101 is provided with the second sound insulation module 112. The second portion 101b is different from the first portion 101a, but may at least partly overlap. However, in the example of Fig. 3 the second portion 101b is not overlapping with the first portion 101a, and is adjacent the first portion 101a.

Turning briefly to **FIG. 4****,** showing a side view of a sound emitting source 122 and a sound reduction arrangement 100 corresponding to that of Fig. 3 but which is divided into sound reduction arrangement portions 100a, 100b, 100c, 100d. Hereby, the sound reduction arrangement portions 100a, 100b, 100c, 100d may be arranged to enclose the sound emitting source 122 at the top (from above), at the bottom (from below) and sides. In more detail, a first sound reduction arrangement portion 100a is arranged to absorb sound from the top of the sound emitting source 122, a second sound reduction arrangement portion 100b is arranged to absorb sound from the bottom of the sound emitting source 122, and at least a third and a fourth sound reduction arrangement portion 100c, 100d are arranged to absorb sound from the sides of the sound emitting source 122. Typically, the sound emitting source 122 may be enclosed by sound reduction arrangement portions in all directions.

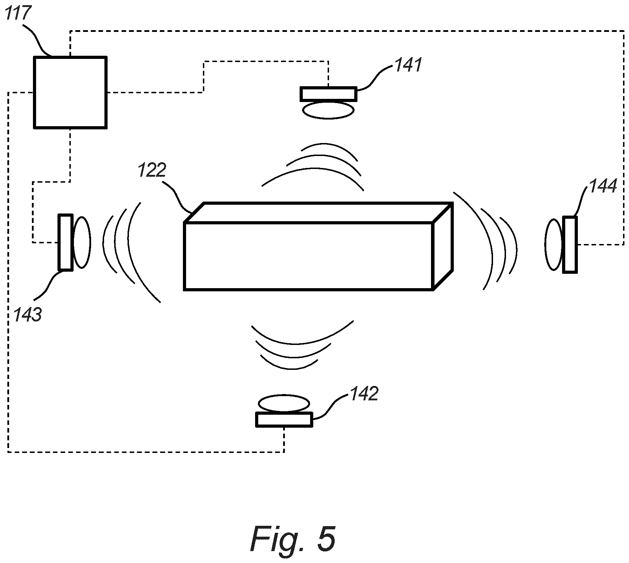

With additional reference to **FIG. 5****,** the sound reduction arrangement 100 may further comprise a control unit 117 (e.g. the control unit 17 shown in Fig. 1) and a plurality of sensors 141, 142, 143, 144. In Fig. 5, the plurality of sensors 141, 142, 143, 144 is arranged in the surroundings of the sound emitting source 122 and is configured to communicate with the control unit 117. The control unit 117 is configured to determine the sound level and frequency of the sound emitted from the sound emitting source 122 by measurements of the sensors 141, 142, 143, 144 to achieve a sound mapping of the sound level and frequency. For example, the sound level and frequency of the emitted sound from the sound emitting source 122 in the sound mapping are determined or measured by the plurality of sensors 141, 142, 143, 144. As shown in Fig. 5, the sensors 141, 142, 143, 144 may be arranged to enclose the sound emitting source 122 in order to measure the sound level and frequency in various directions of the sound emitting source 122. For example, the sensors, here being a first sensor 141, a second sensor 142, a third sensor 143 and a fourth sensor 144 may be arranged such that the sound mapping corresponds to a three-dimensional surrounding of the sound emitting source 122. The first sensor 141 may e.g. be arranged relative to a top of the sound emitting source 122, the second sensor 142 may be arranged relative to a bottom of the sound emitting source 122 and the third and fourth sensors 143, 144 may be arranged relative to the sides of the sound emitting source 122. Additionally or alternatively, the sound mapping may be based on one or more two-dimensional projections of the three-dimensional surroundings of the sound emitting source 122, wherein at least one of such projections overlap with the outer surface 103 of the carrier 101 (which is exemplified and described later). The control unit 117 and the plurality of sensors 141, 142, 143, 144 may be referred to as an arrangement for providing a sound mapping of the sound emitting source 122.

The arrangement of the first and second sound insulation modules 110, 112 is preferably carried out in response to the sound mapping of the sound emitting source 122. Thus, the first portion 101a of the carrier 101 is typically associated with a first sound level and a first frequency for which the sound reduction of the first sound insulation module 110 is adapted. In other words, the first sound insulation module 110 is chosen to be arranged at the first portion 101a as the sound reducing capability of the first sound insulation module 110 may be achieved for the first sound level and the first frequency. Correspondingly, the second portion 101b of the carrier 101 is typically associated with a second sound level and a second frequency for which the sound reduction of the second sound insulation module 112 is adapted. In other words, the second sound insulation module 112 is chosen to be arranged at the second portion 101b as the sound reducing capability of the second sound insulation module 112 may be achieved for the second sound level and the second frequency.

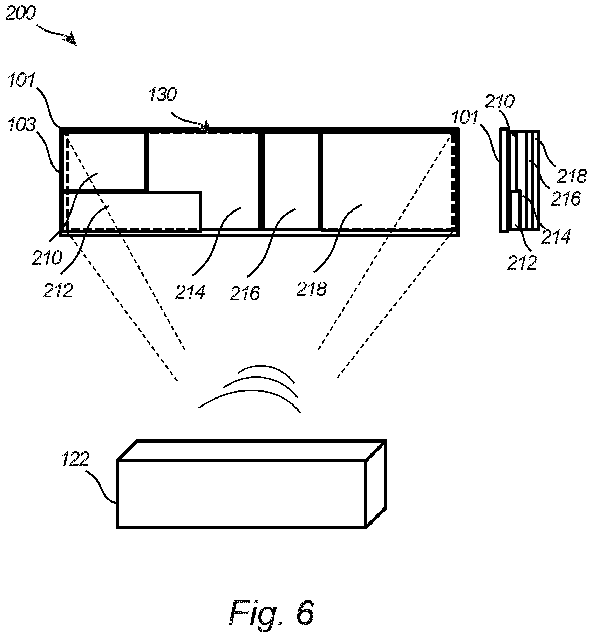

In **FIG. 6****,** an alternative embodiment of a sound reduction arrangement 200 is shown, in a front view to the left and a side view to the right. The sound reduction arrangement 200 may be identical to the sound reduction arrangement 100 previously described but with the difference that the first and second sound insulation modules 110, 112 here is corresponding to a first, second, third, fourth and fifth sound insulation module 210, 212, 214, 216, 218. For example, each one of the first, second, third, fourth and fifth sound insulation module 210, 212, 214, 216, 218 is composed of a material differing from the other modules, and is of thickness differing from the other modules. The carrier 101 may be the same as previously described for the sound reduction arrangement 100, and the attachment of the sound insulation modules 210, 212, 214, 216, 218 to the carrier 101 may be correspondingly to that for the sound reduction arrangement 100.

Here, the sound mapping performed by the control unit 117 may be provided at least for a projected surface 130 in the surroundings of the sound emitting source 122, the projected surface 130 at least partly overlapping with the outer surface 103 of the carrier 101. The arrangement of the first, second, third, fourth and fifth sound insulation modules 210, 212, 214, 216, 218 is preferably carried out in response to the sound mapping of the sound emitting source 122, and hence the sound mapping for at least the projected surface 130. As previously described, various portions of the carrier 101 is provided with a matching sound insulation module 210, 212, 214, 216, 218 to achieve the desired sound reducing capability.

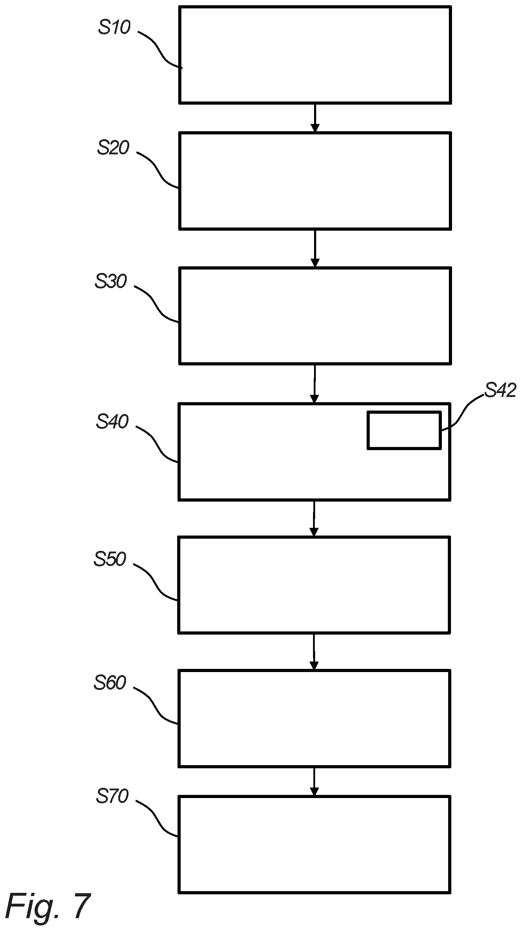

**FIG. 7** is a flow chart of a method for providing sound reduction of a vehicle component being a sound emitting source. The sound insulation modules, the carrier and the control unit mentioned in the method may e.g. be those described with reference to Figs. 2-6. Thus, reference is further made to features described in Figs. 2-6 in the following.

In a first action or step, S10, a first sound insulation module 110 and a second insulation module 112 are provided. The first insulation module 110 is composed of a first material M1 and having a first thickness Th1 for achieving a first sound-reducing capability with regards to sound level (dB) and frequency (Hz) of the emitted sound. The second sound insulation module 112 is composed of a second material M2 and a having second thickness Th2 for achieving a second sound-reducing capability with regards to sound level and frequency of the emitted sound, the second material M2 being different from the first material M1 and the second thickness Th2 being different from the first thickness Th1. The first material M1 and first thickness Th1 of the first sound insulation module 110 may be adapted to achieve the first sound-reducing capability for a predetermined first range of the sound level and a predetermined first range of the frequency of the emitted sound from the sound emitting source 122. Correspondingly, the second material M2 and second thickness Th2 of the second sound insulation module 112 may be adapted to achieve the second sound-reducing capability for a predetermined second range of the sound level and a predetermined second range of the frequency of the emitted sound from the sound emitting source 122. Typically the first range of the sound level is fully different from, or at least partly overlapping with, the second range of the sound level and/or the first range of the frequency is fully different from, or at least partly overlapping with, the second range of the frequency.

As shown in Fig. 6, there may be more than two sound insulation modules, e.g. three, four, five or six sound insulation modules. As exemplified in Fig. 6, all of the sound insulation modules (in this case five sound insulation modules 210, 212, 214, 216, 218) may differ in material and thickness. In another example, at least one of the sound insulation modules (e.g. one of the five sound insulation modules 210, 212, 214, 216, 218) only differ from another sound insulation module by its thickness or material. Additionally or alternatively, at least two of the sound insulation modules (e.g. one of five sound insulation modules 210, 212, 214, 216, 218) are of the same type, i.e. of the same thickness and material, wherein at least of the sound insulation modules has a material and thickness different from one another.

In a second action or step, S20, a carrier 101 is arranged to at least partly enclose the sound emitting source 12, 22, 122, the carrier having an outer surface 103 provided with an attachment structure 105 configured to attach, and support, the first and second sound insulation modules 110, 112. For example, the carrier is arranged to enclose, such as fully enclose, the sound emitting source 12, 22, 122. The carrier 101 may form part of a housing enclosing the sound emitting source 12, 22, 122. The attachment structure 105 may e.g. span over a majority of the outer surface 103 of the carrier 101. The attachment structure 105 may e.g. comprise a grid 105a of mechanical or adhesive fasteners as previously described. Such grid 105a may e.g. enable an adaptive arrangement of the first and second sound insulation modules 110, 112 onto the carrier 101.

In an optional third action of step, S30, the sound level (in dB) and frequency (in Hz) of the sound emitted from the sound emitting source 12, 22, 122 is determined to achieve a sound mapping of the sound level and frequency. The sound mapping may be determined or measured by a plurality of sensors 141, 142, 143, 144 as described with reference to Fig. 5, and typically be means of a control unit 17, 117 being in communication with the sensors 141, 142, 143, 144.

In a fourth action or step, S40, the first and second sound insulation modules 110, 112 are attached onto the attachment structure 105 of the carrier 101 such that a first portion 101a of the carrier 101 is provided with the first sound insulation 110 module and a second portion 101b of the carrier 101 is provided with the second sound insulation module 112. For example, the fourth action or step S40 may be carried out by a sub-action or sub-step S42 in which the first and second sound insulation modules 110, 112 are attached onto the attachment structure 105 of the carrier 101 in response to the sound mapping. The first portion 101a of the carrier 101 is associated with a first sound level and a first frequency for which the sound reduction of the first sound insulation module 110 is adapted, and the second portion 101b of the carrier 101 is associated with a second sound level and a second frequency for which the sound reduction of the second sound insulation module 112 is adapted. That is, the first portion 101a of the carrier 101 may be associated with a sound level and frequency of the emitted sound for which the first insulation module 110, composed of the first material M1 and having the first thickness Th1, achieves the first sound-reducing capability. Correspondingly, the second portion 101b of the carrier 101 may be associated with a sound level and frequency of the emitted sound for which the second insulation module 112, composed of the second material M2 and having the second thickness Th2, achieves the second sound-reducing capability. In case of more sound insulation modules, as shown in e.g. Fig. 6, the carrier 101 may be divided into more corresponding portions to which an associated sound insulation module (with matching sound-reducing capability to the sound mapping with regards to sound level and frequency) is attached.

The first and second sound insulation modules 110, 112 are preferably removable and replaceable relative to the attachment structure 105 of the carrier 101. As explained with reference to Figs. 2-3, the attachment structure 105 may comprise a grid 105a of mechanical or adhesive fasteners enabling an adaptive arrangement of the first and second sound insulation modules 110, 112 onto the carrier 101. The attachment structure 105 of the carrier 101 may e.g. comprise a plurality of slots or hooks. Typically, each one of the first and second sound insulation modules 110, 112 comprises an associated attachment structure 110a, 112a configured to adhere to the attachment structure 105 of the carrier 101, e.g. by that the associated attachment structures 110a, 112a of the first and second sound insulation modules 110, 112 comprises corresponding hooks or slots. Moreover, first and second sound insulation modules 110, 112 may be configured to be interlocked with one another to form a continuous sound barrier by an interlocking structure 110b, 112b as described with reference to Figs. 2-3.

In an optional fifth action or step, S50, the sound level and frequency of the sound emitted from the sound emitting source 12, 22, 122 are monitored after attaching the first and second sound insulation modules 110, 112 onto the attachment structure 105 of the carrier 101. The monitoring of the sound emitted from the sound emitting source 12, 22, 122 is typically achieved by the previously mentioned sensors 141, 142, 143, 144 and control unit 17, 117.

In an optional sixth action of step, S60, at least one of the first and second sound insulation modules 110, 112 is detached from the attachment structure 105 of the carrier 101. For example, the sound insulation module 110, 112 may be hooked off from attachment structure 105.

In an optional seventh action of step, S70, the detached sound insulation module 110, 112 from the sixth action or step S60, is re-attached to the attachment structure 105 of the carrier 101. Typically, the re-attached sound insulation module 110, 112 is attached to the attachment structure 105 in a different position (i.e. a different portion) of the carrier 101. The sixth action or step S60 and the seventh action or step S70 may be together be referred to as an action or step of re-arranging the first and/or second sound insulation module 110, 112 relative to the carrier 101. This may e.g. be carried out in response to the fifth action or step S50, and in response to that the sound reduction of the first and second sound insulation modules 110, 112 does not meet a predefined criterium. The predefined criterium may e.g. be a pre-defined reduction in sound level.

Example 1. A method for providing sound reduction of a vehicle component being a sound emitting source, the method comprising: providing a first sound insulation module composed of a first material and having a first thickness for achieving a first sound-reducing capability with regards to sound level and frequency of the emitted sound, and a second sound insulation module composed of a second material and a having second thickness for achieving a second sound-reducing capability with regards to sound level and frequency of the emitted sound, the second material being different from the first material and the second thickness being different from the first thickness; arranging a carrier to at least partly enclose the sound emitting source, the carrier having an outer surface provided with an attachment structure configured to attach, and support, the first and second sound insulation modules; attaching the first and second sound insulation modules onto the attachment structure of the carrier such that a first portion of the carrier is provided with the first sound insulation module and a second portion of the carrier is provided with the second sound insulation module.

Example 2. The method of example 1, wherein the first and second sound insulation modules are removable and replaceable relative to the attachment structure of the carrier.

Example 3. The method of any of examples 1-2, wherein the first material and first thickness of the first sound insulation module is adapted to achieve the first sound-reducing capability based on a predetermined range of the sound level and a predetermined range of frequency of the emitted sound, and wherein the second material and second thickness of the second sound insulation module is adapted to achieve the second sound-reducing capability based on a predetermined range of the sound level and a predetermined range of frequency of the emitted sound.

Example 4. The method of any of examples 1-3, further comprising: determining the sound level and frequency of the sound emitted from the sound emitting source to achieve a sound mapping of the sound level and frequency, wherein the first and second sound insulation modules are attached onto the attachment structure of the carrier in response to the sound mapping.

Example 5. The method of example 4, wherein the first portion of the carrier is associated with a first sound level and a first frequency for which the sound reduction of the first sound insulation module is adapted, and wherein the second portion of the carrier is associated with a second sound level and a second frequency for which the sound reduction of the second sound insulation module is adapted.

Example 6. The method of any of examples 4-5, further comprising: monitoring the sound level and frequency of the sound emitted from the sound emitting source after attaching the first and second sound insulation modules onto the attachment structure of the carrier; and re-arranging the first and second sound insulation modules relative to the carrier in response to that the sound reduction of the first and second sound insulation modules does not meet a predefined criterium.

Example 7. The method of any of examples 1-6, wherein the attachment structure comprises a grid of mechanical or adhesive fasteners enabling an adaptive arrangement of the first and second sound insulation modules onto the carrier.

Example 8. The method of example 7, wherein the attachment structure spans over a majority of the carrier.

Example 9. The method of any of examples 1-8, wherein the first and second sound insulation modules are configured to be interlocked with one another to form a continuous sound barrier.

Example 10. A sound reduction arrangement for reducing sound from a vehicle component being a sound emitting source, the sound reduction arrangement comprising: a first sound insulation module composed of a first material and having a first thickness for achieving a first sound-reducing capability with regards to sound level and frequency of the emitted sound, and a second sound insulation module composed of a second material and a having second thickness for achieving a second sound-reducing capability with regards to sound level and frequency of the emitted sound, the second material being different from the first material and the second thickness being different from the first thickness; a carrier configured to at least partly enclose the sound emitting source, the carrier having an outer surface provided with an attachment structure configured to attach, and support, the first and second sound insulation modules; wherein the first and second sound insulation modules are attached onto the attachment structure of the carrier such that a first portion of the carrier is provided with the first sound insulation module and a second portion of the carrier is provided with the second sound insulation module.

Example 11. The sound reduction arrangement of example 10, wherein the first and second sound insulation modules are removable and replaceable relative to the attachment structure of the carrier.

Example 12. The sound reduction arrangement of any of examples 10-11, wherein the first material and first thickness of the first sound insulation module is adapted to achieve the first sound-reducing capability based on a predetermined range of the sound level and a predetermined range of frequency of the emitted sound, and wherein the second material and second thickness of the second sound insulation module is adapted to achieve the second sound-reducing capability based on a predetermined range of the sound level and a predetermined range of frequency of the emitted sound.

Example 13. The sound reduction arrangement of any of examples 10-12, further comprising a control unit configured to determine the sound level and frequency of the sound emitted from the sound emitting source to achieve a sound mapping of the sound level and frequency, wherein the first and second sound insulation modules are attached onto the attachment structure of the carrier in response to the sound mapping.

Example 14. The sound reduction arrangement of any of examples 10-13, wherein the first portion of the carrier is associated with a first sound level and a first frequency for which the sound reduction of the first sound insulation module is adapted, and wherein the second portion of the carrier is associated with a second sound level and a second frequency for which the sound reduction of the second sound insulation module is adapted.

Example 15. The sound reduction arrangement of any of examples 10-14, wherein the attachment structure comprises a grid of mechanical or adhesive fasteners enabling an adaptive arrangement of the first and second sound insulation modules onto the carrier.

Example 16. The sound reduction arrangement of example 15, wherein the attachment structure spans over a majority of the carrier.

Example 17. The sound reduction arrangement of any of examples 10-16, wherein the first and second sound insulation modules are configured to be interlocked with one another to form a continuous sound barrier.

Example 18. The sound reduction arrangement of any of examples 10-17, further comprising the vehicle component being the sound emitting source.

Example 19. A vehicle comprising the sound reduction arrangement of any of examples 10-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for providing sound reduction of a vehicle component being a sound emitting source (12, 22, 122), the method comprising:
- providing (S10) a first sound insulation module (110) composed of a first material (M1) and having a first thickness (Th1) for achieving a first sound-reducing capability with regards to sound level (dB) and frequency (Hz) of the emitted sound, and a second sound insulation module (112) composed of a second material (M2) and a having second thickness (Th2) for achieving a second sound-reducing capability with regards to sound level (dB) and frequency (Hz) of the emitted sound, the second material (M2) being different from the first material (M1) and the second thickness (Th2) being different from the first thickness (Th1),
- arranging (S20) a carrier (101) to at least partly enclose the sound emitting source (122), the carrier (101) having an outer surface (103) provided with an attachment structure (105) configured to attach, and support, the first and second sound insulation modules (110, 112),
- attaching (S40) the first and second sound insulation modules (110, 112) onto the attachment structure (105) of the carrier (101) such that a first portion (101a) of the carrier (101) is provided with the first sound insulation module (110) and a second portion (101b) of the carrier (101) is provided with the second sound insulation module (112).

2. The method of claim 1, wherein the first and second sound insulation modules (110, 112) are removable and replaceable relative to the attachment structure (105) of the carrier (101).

3. The method of any of claims 1-2, wherein the first material (M1) and first thickness (Th1) of the first sound insulation module (110) is adapted to achieve the first sound-reducing capability based on a predetermined range of the sound level (dB) and a predetermined range of frequency (Hz) of the emitted sound, and wherein the second material (M2) and second thickness (Th2) of the second sound insulation module (112) is adapted to achieve the second sound-reducing capability based on a predetermined range of the sound level (dB) and a predetermined range of frequency (Hz) of the emitted sound.

4. The method of any of claims 1-3, further comprising:
- determining (S30) the sound level (dB) and frequency (Hz) of the sound emitted from the sound emitting source (122) to achieve a sound mapping of the sound level and frequency, wherein the first and second sound insulation modules (110, 112) are attached onto the attachment structure (105) of the carrier (101) in response to the sound mapping.

5. The method of claim 4, wherein the first portion (101a) of the carrier (101) is associated with a first sound level (dB) and a first frequency (Hz) for which the sound reduction of the first sound insulation module (110) is adapted, and wherein the second portion (101b) of the carrier (101) is associated with a second sound level (dB) and a second frequency (Hz) for which the sound reduction of the second sound insulation module (112) is adapted.

6. The method of any of claims 4-5, further comprising:
- monitoring (S50) the sound level (dB) and frequency (Hz) of the sound emitted from the sound emitting source (122) after attaching the first and second sound insulation modules (110, 112) onto the attachment structure (105) of the carrier (101), and
- re-arranging (S60, S70) the first and second sound insulation modules (110, 112) relative to the carrier (101) in response to that the sound reduction of the first and second sound insulation modules (110, 112) does not meet a predefined criterium.

7. The method of any of claims 1-6, wherein the attachment structure (105) comprises a grid (105a) of mechanical or adhesive fasteners enabling an adaptive arrangement of the first and second sound insulation modules (110, 112) onto the carrier (101).

8. The method of claim 7, wherein the attachment structure (105) spans over a majority of the carrier (101).

9. The method of any of claims 1-8, wherein the first and second sound insulation modules (110, 112) are configured to be interlocked with one another to form a continuous sound barrier.

10. A sound reduction arrangement (100, 200) for reducing sound from a vehicle component being a sound emitting source (12, 22, 122), the sound reduction arrangement (100, 200) comprising:
- a first sound insulation module (110) composed of a first material (M1) and having a first thickness (Th1) for achieving a first sound-reducing capability with regards to sound level (dB) and frequency (Hz) of the emitted sound, and a second sound insulation module (112) composed of a second material (M2) and a having second thickness (Th2) for achieving a second sound-reducing capability with regards to sound level (dB) and frequency (Hz) of the emitted sound, the second material (M2) being different from the first material (M1) and the second thickness (Th2) being different from the first thickness (Th1),
- a carrier (101) configured to at least partly enclose the sound emitting source (12, 22, 122), the carrier (101) having an outer surface (103) provided with an attachment structure (105) configured to attach, and support, the first and second sound insulation modules (110, 112), wherein the first and second sound insulation modules (110, 112) are attached onto the attachment structure (105) of the carrier (101) such that a first portion (101a) of the carrier (101) is provided with the first sound insulation module (110) and a second portion (101b) of the carrier (101) is provided with the second sound insulation module (112).

11. The sound reduction arrangement (100, 200) of claim 10, wherein the first and second sound insulation modules (110, 112) are removable and replaceable relative to the attachment structure (105) of the carrier (101).

12. The sound reduction arrangement (100, 200) of any of claims 10-11, wherein the first material (M1) and first thickness (Th1) of the first sound insulation module (110) is adapted to achieve the first sound-reducing capability based on a predetermined range of the sound level (dB) and a predetermined range of frequency (Hz) of the emitted sound, and wherein the second material (M2) and second thickness (Th2) of the second sound insulation module (112) is adapted to achieve the second sound-reducing capability based on a predetermined range of the sound level (dB) and a predetermined range of frequency (Hz) of the emitted sound.

13. The sound reduction arrangement (100, 200) of any of claims 10-12, further comprising a control unit (17, 117) configured to determine the sound level (dB) and frequency (Hz) of the sound emitted from the sound emitting source (12, 22, 122) to achieve a sound mapping of the sound level (dB) and frequency (Hz), wherein the first and second sound insulation modules (110, 112) are attached onto the attachment structure (105) of the carrier (101) in response to the sound mapping.

14. The sound reduction arrangement (100, 200) of any of claims 10-13, further comprising the vehicle component being the sound emitting source (12, 22, 122).

15. A vehicle (1) comprising the sound reduction arrangement (100, 200) of any of claims 10-14.
